# EUROPÄISCHE PATENTSCHRIFT

(11) **EP 3 509 920 B1**
(45) Veröffentlichungstag und Bekanntmachung des Hinweises auf die Patenterteilung: **01.06.2022**
(21) Anmeldenummer: 17755474.8
(22) Anmeldetag: 16.08.2017
(51) Int. Cl.: B60T 11/18

(54) **BREMSGERÄT FÜR EINE HYDRAULISCHE KRAFTFAHRZEUGBREMSANLAGE**
BRAKE DEVICE FOR A HYDRAULIC VEHICLE BRAKE
APPAREIL DE FREINAGE POUR UN FREIN HYDRAULIQUE D'UN VEHICHLE

(30) Priorität: 06.09.2016 DE 102016216854; 21.09.2016 DE 102016218183
(43) Veröffentlichungstag der Anmeldung: 17.07.2019
(73) Patentinhaber: Continental Teves AG & Co. OHG, 60488 Frankfurt am Main (DE)
(72) Erfinder: COLASANTA, Jefferson, 65719 Hofheim am Taunus (DE); SELLINGER, Thomas, 63303 Dreieich (DE); RÜFFER, Manfred, 65843 Sulzbach (DE); KRÄMER, Horst, 65462 Ginsheim-Gustavsburg (DE)
(74) Vertreter: Continental Corporation
(86) Internationale Anmeldenummer: PCT/EP2017/070753
(87) Internationale Veröffentlichungsnummer: WO 2018/046262

(56) Entgegenhaltungen:
- EP-A1- 0 469 947
- EP-A1- 0 896 162
- EP-A1- 1 431 596
- WO-A1-93/15942
- WO-A1-02/070314
- WO-A1-2005/002937
- US-A- 5 163 773
- US-A- 5 934 151

## Beschreibung

Die Erfindung betrifft ein Bremsgerät für eine hydraulische Kraftfahrzeugbremsanlage nach dem Oberbegriff des Anspruchs 1.

Es ist bekannt, für hydraulische Bremsanlagen bei Kraftfahrzeugen Bremsgeräte zu verwenden, die einen Hauptbremszylinder mit einem zur Bremsdruckerzeugung linear verschiebbaren Zylinderkolben aufweisen, welcher durch eine mit einem Bremspedal mechanisch gekoppelte Betätigungstange in einer kraftübertragenden Verbindung verbunden ist. Hierbei wird beispielhaft auf eine Bremsanlage gemäß WO 02/070314 A1 verwiesen. Dabei muss zugleich eine zuverlässige Anbindung der Betätigungsstange an den Kolben und an das Bremspedal, ein Winkelausgleich zwischen den Komponenten im Betrieb, eine einfache Montage und dauerhaft geräuscharmer betrieb realisiert werden. Zunehmend werden elektronisch fremdansteuerbare Bremsgeräte mit integrierten elektrohydraulischen oder elektromechanischen Verstärkerstufen und auch Druckmodulationsstufen eingesetzt, welche eine kompakte Bauweise anstreben und für schnelle dynamische Bremsvorgänge ausgelegt sind. Dadurch wird insbesondere eine sichere Anbindung der Betätigungsstange an den Zylinderkolben mit einer effektiven Übertragung von Zug- und Druckkräften wichtig.

Es ist bspw. bekannt, eine zwecks Winkelausgleichs mit einem Kugelkopf versehene Betätigungsstange in einem gesonderten Aufsatz zu verpressen oder zu vercrimpen und diesen in dem Zylinderkolben unlösbar zu verstemmen. Um dabei die Kopplung der Betätigungsstange an das im Fahrzeuginnenraum angebrachte Bremspedal und die Montage des Bremsgeräts im Motorraum zu ermöglichen muss die Betätigungsstange zweigeteilt oder deren Schnittstelle zum Bremspedal besonders komplex gestaltet werden.

Es stellt sich somit eine Aufgabe, ein verbessertes Bremsgerät der eingangs genannten Gattung anzubieten, das unter Vermeidung der vorgenannten Nachteile eine sichere Verbindung zwischen der Betätigungsstange und dem Zylinderkolben und zugleich eine möglichst einfache Montage im Fahrzeug erlaubt.

Die Aufgabe wird erfindungsgemäß durch ein Bremsgerät mit Merkmalskombination nach Anspruch 1 gelöst. Unteransprüche geben weitere vorteilhafte Ausführungen und Weiterbildungen der Erfindung an.

Die Erfindung sieht vor, dass die Betätigungsstangeneinheit durch eine Rastverbindung an dem Zylinderkolben festgemacht ist, wobei die Rastverbindung lediglich durch eine axiale Relativverschiebung zwischen der Betätigungsstangeneinheit und dem Zylinderkolben herbeigeführt ist. Damit wird die Montage erheblich vereinfacht, mehrere Prozessschritte wie das Einpressen von Dämpfungsscheiben oder Adapteraussätzen, das Verstemmen der Kolbenstange in dem Zylinderkolben und gegebenenfalls die Verschraubung der Kolbenstange mit dem Gabelkopf zwecks Bremspedalankopplung, können entfallen.

Gemäß einer Weiterbildung der Erfindung ist die an dem Zylinderkolben verrastete Betätigungsstangeneinheit in axiale Richtung relativ zum Zylinderkolben begrenzt verschiebbar vorgesehen, womit die Rastverbindung besonders einfach sicher reproduzierbar und akustisch hörbar erfolgen kann, die Toleranzanforderungen und Prüfaufwand werden verringert.

Die Erfindung sieht ebenso vor, dass die Betätigungsstangeneinheit eine einteilige Betätigungsstange aufweist, an deren zylinderkolbenseitigen Ende ein gesondertes Halteteil festgemacht ist, das zur Kräfteübertragung aus der Betätigungsstange in den Zylinderkolben in beide axialen Richtungen vorgesehen ist. Gemäß einer weiteren bevorzugten Weiterbildung weist das Halteteil wenigstens eine Rastnase auf, die mit einem axialen Anschlag am Zylinderkolben zusammenwirkt. Dadurch kann die Betätigungsstangeneinheit als eine vorgefertigte Baugruppe erst bei der Endmontage des Bremsgeräts im Fahrzeug zum Einsatz kommen und den Aufwand bei der Endmontage erheblich reduzierten. Durch die einteilige Betätigungsstange könne die erforderlichen Funktionsmaße einfacher eingehalten, und der Aufwand für Kalibrierung und Prüfung reduziert werden.

Gemäß einer besonders bevorzugten erfindungsgemäßen Ausführungsform wird die axial der Rastnase zugewandte Stirnfläche des Anschlags am Zylinderkolben derart schräg oder verrundet ausgebildet, dass der Anschlag einen radialen Hinterschnitt aufweist. Dadurch können die korrespondierenden Kontaktflächen derart zum Zusammenwirken gebracht werden, dass die Rastnase bei einem axial gerichteten Anpressen gegen den Anschlag mit einer radial nach außen wirkenden Kraftkomponente beaufschlagt und versetzt wird. Hierdurch wird ein herausrutschen des Halteteils auch bei besonders hochdynamischen Bremsvorgängen effektiv verhindert und eine funktionsgünstige Selbstzentrierung herbeigeführt, das Gewicht kann reduziert werden.

Gemäß einer vorteilhaften erfindungsgemäßen Ausführungsform ist das Halteteil zweiteilig ausgebildet und weist ein Druckteil, das zur Übertragung der Betätigungskraft aus der Betätigungsstange in den Zylinderkolben vorgesehen ist sowie ein Rastteil, das mit dem Druckteil verbunden ist und wenigstens eine Rastnase zum Verrasten in dem Zylinderkolben aufweist. Die beiden Teile können dadurch gezielt aus den für die verschiedenen Belastungsszenarien jeweils besonders geeigneten Werkstoffen hergestellt werden.

Eine besonders vorteilhafte Ausführungsform sieht vor, dass das Rastteil aus einem thermoplastischen Werkstoff ausgebildet ist, womit auch eine besonders komplexe Formgebung einfach und kostengünstig mittels Spritzgießens hergestellt werden kann.

Vorzugsweise weist das das Halteteil 6 und wenigstens 3 am Umfang verteilt angeordneten Rastnasen auf, wodurch eine räumlich bestimmte, stabile Auflage und Abstützung zur Kraftübertragung erreicht wird.

Gemäß einer weiteren vorteilhaften Ausführung ist jede Rastnase jeweils an einem ersten, freien Ende eines Federarms ausgebildet, dessen zweites Ende mit dem Halteteil vereinigt ist, womit eine ausreichender elastischer Verformungsmaß ohne großen Kraftaufwand auch beim Einsatz von besonders festen Werkstoffen erreicht werden kann.

Die Erfindung sieht auch vor, das der Zylinderkolben in seiner unbetätigten Ausgangslage durch das Halteteil axial gegen das Gehäuse abgestützt ist, wodurch die Montage weiter vereinfacht werden kann.

Hierfür sieht eine bevorzugte Ausführung der Erfindung vor dass das Halteteil an seinem dem Zylinderkolben abgewandten Ende einen Stützring aufweist, der zur Einleitung von Axialkräften aus dem Zylinderkolben in das Gehäuse vorgesehen ist.

Für die weitere Vereinfachung der Montage sieht die Erfindung vor, dass die Betätigungsstange einen Radialabsatz aufweist, durch den in die Betätigungsstange eine in einer Rückstellefeder generierte Rückstellkraft zum axialen Versetzen der Betätigungsstangeneinheit in eine ungebremste Ausgangslage eingeleitet wird und die Rückstellkraft gemäß einer bevorzugten Ausführungsform über ein Stützelement in den Radialabsatz eingeleitet wird, das axial verschiebbar an der Betätigungsstange geführt angeordnet ist.

Gemäß einer weiteren bevorzugten erfindungsgemäßen Ausführungsform ist das Bremsgerät zur Erzeugung von Bremsdruck mit wenigstens einer elektromechanischen oder elektrohydraulischen Verstärkerstufe zusammenwirkend oder in eine Verstärkerstufe integriert vorgesehen. Dadurch kann das Bremsgerät als ein einfach montierbares und platzsparendes Funktionsmodul angeboten werden, welches sämtliche wesentliche Bremsfunktionen in einer einzigen Baugruppe vereinigt.

Weitere Merkmale und Vorteile der Erfindung ergeben sich aus der nachfolgenden Beschreibung eines erfindungsgemäßen Ausführungsbeispiels. Nachstehend zeigten:
Fig.1 eine Teilansicht einer ersten erfindungsgemäßen Ausführungsform des verbesserten Bremsgeräts mit der angekoppelten Betätigungsstange in Längsschnitt a) sowie eine bekannte, nachteilige Ausführung der Schnittstelle zwischen der Betätigungsstange und dem Zylinderkolben b).
Fig.2 eine Ausführungsform des erfindungsgemäßen Halteteils.
Fig.3 Vergrößerte Detailansicht der Schnittstelle zwischen der Betätigungsstangeneinheit und dem Zylinderkolben gemäß Ausführungsform nach Fig.1a in Längsschnitt.
Fig.4-7 Detailansichten nach Fig.3 in der unbetätigten Lösestellung Fig.4), während eines Betätigungsvorganges Fig.5), im Rücklauf Fig.6) und der anschließenden Ruhestellung Fig.7).
Fig.8 Kraftverlauf beim Anschlagen am Stützanschlag.
Fig.9 Übersicht des Zylinderkolbens sowie einiger relevanten Komponenten der Betätigungsstangeneinheit.

### Fig.1

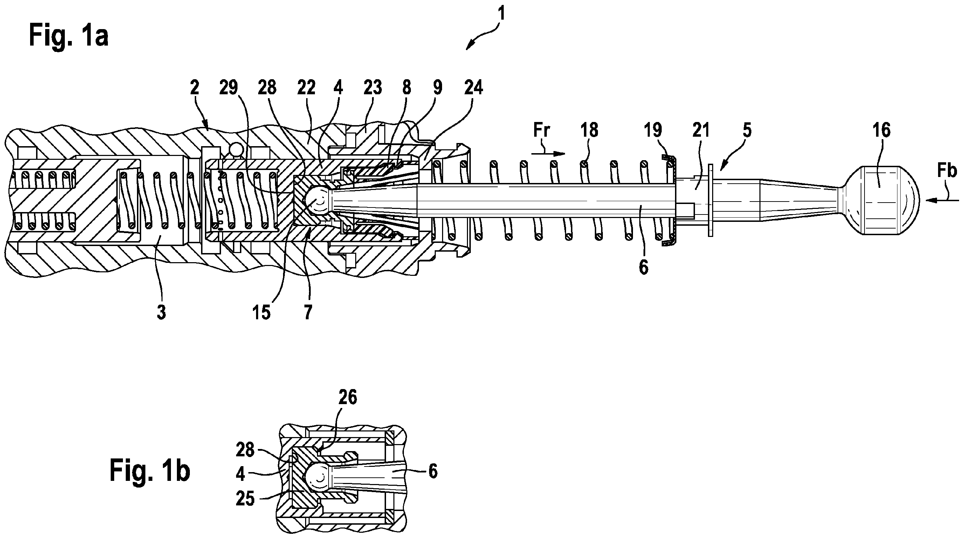

In der Fig.1a ist ein Ausschnitt einer erfindungsgemäßen Ausführungsform des Bremsgeräts 1 für eine hydraulische Kraftfahrzeugbremsanlage abgebildet.

Das Bremsgerät 1 verfügt über ein Gehäuse 2, welches einen Korpus 22 und ein Rückteil 23 aufweist, die miteinander in einer Zug- und Druckkraftübertragende Verbindung stehen, welche beispielsweise durch nicht gezeigte Schraubelemente realisiert ist.

In dem Korpus 22 ist eine mit einem hydraulischen Druckmittel gefüllte und an einen nicht gezeigten Simulator angeschlossene Druckkammer 3 angeordnet, die durch einen Zylinderkolben 4 begrenzt ist. Zur Erzeugung von Bremsdruck in der Druckkammer 3 kann der Zylinderkolben 4 aus seiner hier abgebildeten unbetätigten Ausgangslage axial in Richtung Druckkammer 3 verschoben werden. Die Betätigung des Zylinderkolbens 4 erfolgt mit einer Betätigungskraft Fb durch eine an ihm festgemachte Betätigungsstangeneinheit 5, welche an ihrem dem Zylinderkolben 4 abgewandten Ende mechanisch an ein hier nicht gezeigtes Bremspedal gekoppelt ist.

Die Betätigungsstangeneinheit 5 weist eine einteilige Betätigungsstange 6 auf. Zum Winkelausgleich zwischen der im Wesentlichen längsachsparallelen linearen Bewegung des Zylinderkolbens 4 und der nicht zwangsweise längsachsparallelen Bewegung der Betätigungsstangeneinheit 5 sowie zum Ausgleich von Einbautoleranzen ist die Betätigungsstange 6 in der gezeigten Ausführungsform an ihren beiden Enden mit jeweils eine Kugelkopf 15,16 versehen.

Zum Rückversetzen der Betätigungsstangeneinheit 5 in ihre unbetätigte Ausgangslage ist eine Rückstellfeder 18 vorgesehen, die zwischen dem Gehäuse 2 beziehungsweise seinem Rückteil 23 und einem an der Betätigungsstange 6 axial abgestützten Stützelement 19 eingespannt ist.

In einer Sacklochbohrung 28 in dem Zylinderkolben 4 ist ein Halteteil 7 aufgenommen, in welchem die Betätigungsstange 6 begrenzt kippbar mit ihrem zylinderkolbenseitigen Kugelkopf 15 festgemacht ist.

Ein axialer Anschlag 9, der am betätigungsstangenseitigen Rand des Zylinderkolbens 4 vorgesehen ist, dient zur axialen Fixierung des Halteteils 7 und somit auch der Betätigungsstangeneinheit 5 an dem Zylinderkolben 4. Für eine einfache Montage sind am Halteteil 7 mehrere, vorzugsweise 3 oder 6 am Umfang verteilt angeordneten Rastnasen 8 vorgesehen. Zum Fügen des Zylinderkolbens 4 und der Betätigungsstangeneinheit 6 muss das Halteteil 7 lediglich einfach axial in die Sacklochbohrung 28 hineingeschoben werden. Dabei werden die Rastnasen 8 durch den Anschlag 9 elastisch radial nach innen gedrückt und schnappen nach dem Passieren des Anschlags 9 selbsttätig ein.

Das Halteteil 7 ist dadurch zur Übertragung von Kräften zwischen der Betätigungsstange 6 und dem Zylinderkolben 4 sowohl in radiale als auch in beide axialen Richtungen ausgelegt. Axialkräfte, die in Richtung der Betätigungskraft Fb wirken, werden über die zylinderkolbenseitige Stirnseite 29 des Halteteils 7 in den Bohrungsgrund der Sacklochbohrung 28 übertragen, die entgegenwirkenden Axialkräfte aus dem Halteteil 7 über die Rastnasen 8 in den Anschlag 9 eingeleitet.

In der Fig.1b ist im Gegenzug eine bekannte Befestigungsform einer Betätigungsstange 6 in dem Zylinderkolben 4 gezeigt. An der Betätigungsstange 6 ist kolbenseitig ein Adapter 25 befestigt, der in dem Zylinderkolben 4 verstemmt ist. Hierfür muss ein Randbereich 26 Sacklochbohrung 28 mit einem gesonderten Werkzeug umgeformt werden, wodurch aus dem Zylinderkolben 4 und der Betätigungsstange 6 ein unlösbare Baueinheit gebildet ist, welche die Montage des Zylinderkolbens 4 in dem Gehäuse 2 und die Montage des Bremsgeräts 1 im Fahrzeug erschwert.

### Fig.2

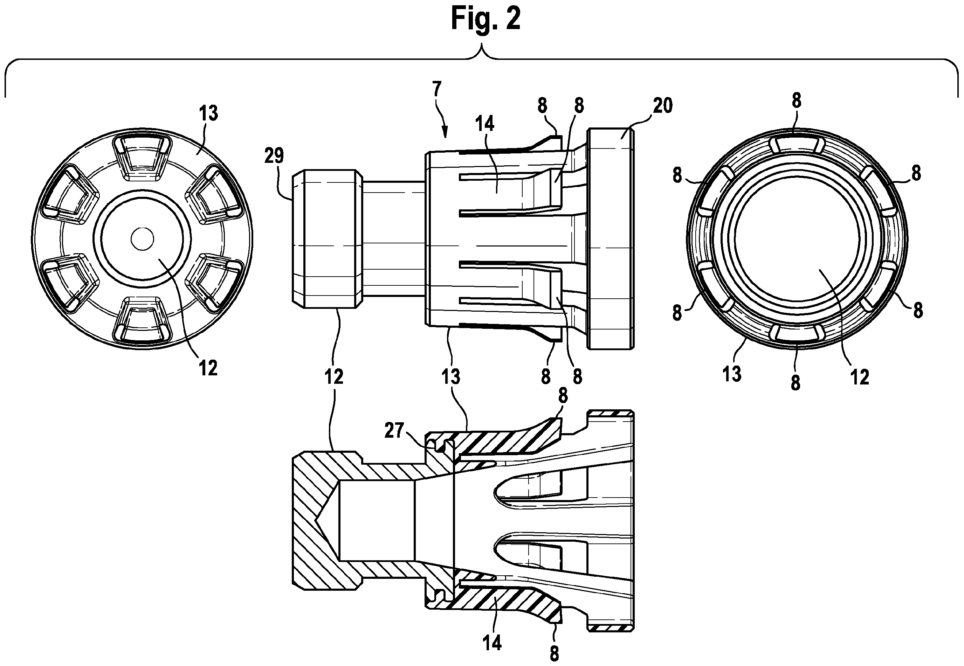

In der Fig.2 ist eine Ausführungsform des Halteteils 7 gemäß der Ausführung nach Fig.1a vergrößert dargestellt.

In der gezeigten Ausführung ist das Halteteil 7 zweiteilig aufgebaut, um den unterschiedlichen Funktionsbereichen einfach und gezielt Werkstoffe mit optimalen Eigenschaften zuzuordnen.

Zum Aufnehmen des Kugelkopfes 15 der Betätigungsstange 6 und Übertragung der Betätigungskräfte in den Zylinderkolben 4 ist ein Druckteil 12 vorgesehen, das aus einem vergleichsweise druckfesteren und dauerhaft formstabilen Werkstoff, vorzugsweise Stahl, gefertigt ist. Das Druckteil 12 ist vorzugsweise über eine als ein Formschluss oder ein kombinierter Form- und Stoffschluss ausgeführte Verbindungsstelle 27 mit einem Rastteil 13 verbunden, an dem die elastisch federnden Rastnasen 8 ausgebildet sind. Vorzugsweise wird das Rastteil 13 als ein Spritzgussteil durch das Umspritzen des Druckteils 12 hergestellt aus einem thermoplastischen Kunststoff, welches eine für die Verrastung ausreichende Elastizität aufweist.

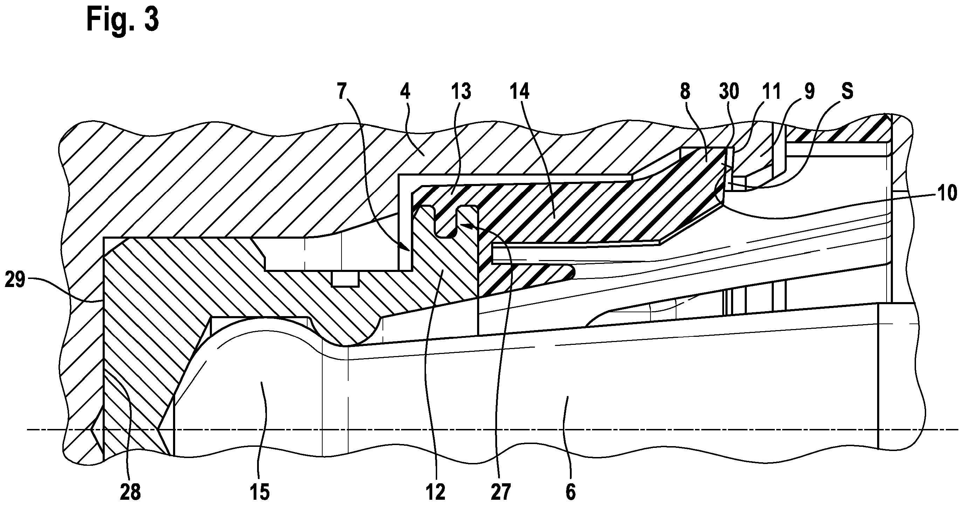

Bei der Vormontage wird der die Betätigungsstange 6 in das Halteteil 7 eingeführt und hinter dem Kugelkopf 15 im Druckteil 12 gecrimpt wie in der Fig.3 zu sehen ist.

Für eine räumlich bestimmte, stabile und ausreichend steife Auflage werden am Halteteil 7 wenigstens 3 am Umfang verteilt angeordnete Rastnasen 8 vorgesehen. Jede Rastnase 8 ist als ein radialer Vorsprung an einem ersten, freien Ende eines Federarms 14 ausgebildet ist, dessen zweites Ende mit dem Halteteil 7 vereinigt ist. Die rückwärtige, zum Anschlag 9 gerichtete Einhackfläche 32 einer jeden Rastnase 8 ist, radial von innen nach außen betrachtet, nach hinten beziehungsweise entgegen der Betätigungskraft Fb gekippt ausgebildet, so dass die Rastnase 8 dadurch bei Anlage am Anschlag 9 radial nach außen gedrückt und in den Hinterschnitt 11 geleitet wird.

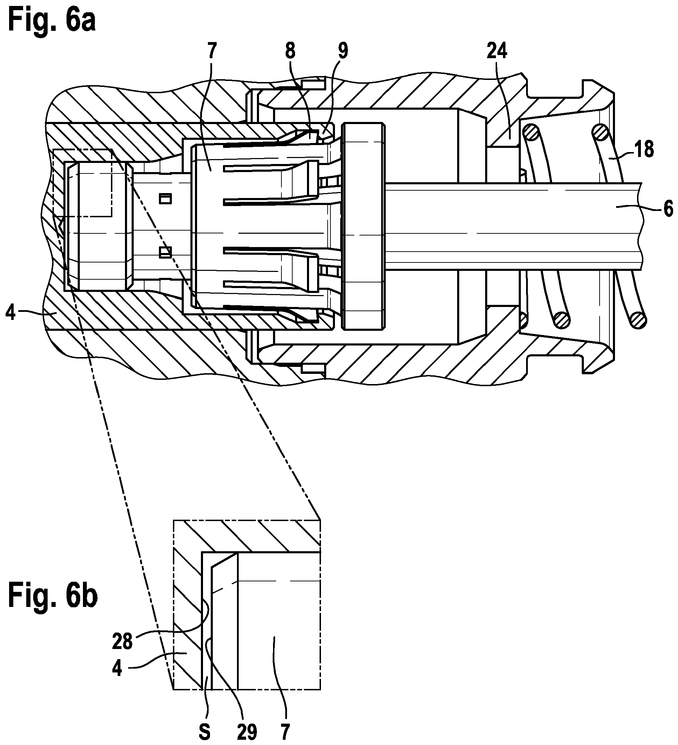

In Umfangsrichtung abwechselnd mit den vorstehend beschriebenen Rastnasen 8 sind am Halteteil 7 Spannnasen vorgesehen. Jede Spannnase ist ebenfalls als ein radialer Vorsprung an einem ersten, freien Ende eines Federarms 14 ausgebildet. Im Unterschied zu der Rastnase 8 weist die Spannnase rückwärtig, zum Anschlag 9 gerichtet eine Gleitfläche auf, welche radial von innen nach außen betrachtet, nach vorne beziehungsweise in Richtung der Betätigungskraft Fb gekippt ausgebildet ist. Dadurch wird die Spannnase bei Anlage am Anschlag 9, unter Aufbau oder Erhöhung einer in Richtung der Betätigungskraft Fb gerichteten Vorstellkraft Fv (siehe Fig.6b), radial nach innen gedrückt.

Dabei sind die Spannnasen axial in Richtung entgegen der Betätigungskraft Fb geringfügig länger als die Rastnasen 8 ausgebildet.

Dadurch liegen die Gleitflächen im eingebauten Zustand stets am Anschlag 9 an. Es wird insbesondere verhindert, dass das Halteteil 7 sich im Zylinderkolben 4 axial unkontrolliert bewegen kann und dadurch klappert. Im eingebauten Zustand, in jedem Betriebszustand und zu jeder Zeit strebt die Vorstellkraft Fv an, das Halteteil 7 zusammen mit der Betätigungsstange 5 in Richtung Fb vorzustellen und den Kontakt der Stirnseite 29 mit dem Zylinderkolben 4 herzustellen oder aufrechtzuerhalten. Jedoch bleibt das Halteteil 7 in dem Zylinderkolben 4 in axiale Richtung relativ zum Zylinderkolben 4 begrenzt verschiebbar, wenn es mit einer Gegenkraft größer als Fv belastet wird.

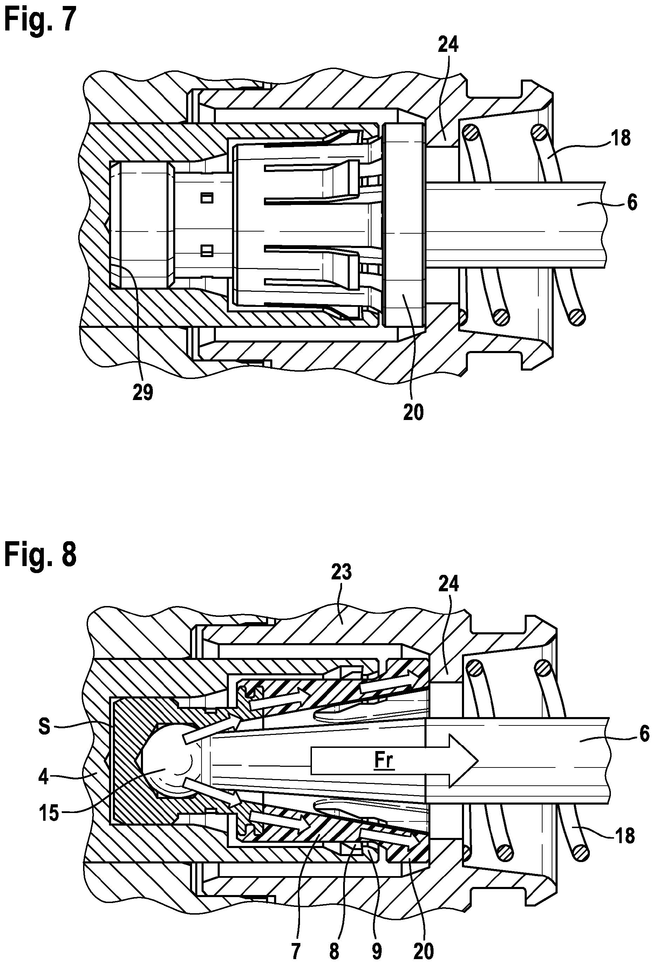

An dem betätigungsstangenseitigen Ende des Halteteils 7 ist axial zu den Rastnasen 8 beabstandet ein Stützring 20 ausgebildet, der zum axialen Abstützen des Zylinderkolbens 4 in seiner unbetätigten Ausgangslage in dem Gehäuse 2 dient. Auf die Funktion des Stützrings 20 wird nachfolgend insbesondere in der Beschreibung zur Fig.8 eingegangen.

### Fig.3

In der Fig.3 ist die Position des Halteteils 7 und der angrenzenden Komponenten in der ungebremsten Ausgangslage gemäß Fig.1a gargestellt. Besonders beachtenswert ist dabei die Ausführung des Anschlags 9 und des korrespondierenden Bereichs der Rastnase 8. Die der Rastnase 8 axial zugewandte Stirnfläche 10 des Anschlags 9 ist schräg beziehungsweise konisch ausgebildet, so dass der Anschlag einen radialen Hinterschnitt 11 aufweist. Auch eine verrundete Kontur ist hierbei möglich. Die zu der Stirnfläche 10 des korrespondierende Kontaktfläche an der Rastnase 8 ist ebenfalls schräg, möglichst parallel zur Kontur der Stirnfläche 10 gestaltet. Durch derartige Gestaltung werden die Rastnasen 8 bei einem axial gerichteten Anpressen gegen den Anschlag 9 mit einer radialen Kraftkomponente beaufschlagt und radial nach außen verschoben. Dadurch werden gleichzeitig eine Zwangszentrierung des Halteteils 7 im Zylinderkolben 4 und eine Verankerung der Rastnasen 8 im Hinterschnitt 11 wie eine Art Hacken erreicht. Dieser Verankerungseffekt ist direkt proportional zu der einwirkenden Axialkraft, wodurch ein Herausrutschen des Halteteils 7 aus dem Zylinderkolben 4 auch unter hohen Kräften verhindert wird.

Um das Verrasten des Halteteils 7 in dem Zylinderkolben 4 bei der Montage zu ermöglichen, muss die Hinterkante 30 der Rastnase 8 an dem Anschlag 9 vorbeilaufen können. Hierfür ist der axiale Abstand zwischen der Hinterkante 30 der Rastnase 8 und der vorderen Stirnseite 29 des Halteteils 7 kleiner als der axiale Abstand zwischen dem Bohrungsgrund 28 und dem Anschlag 9 vorgesehen, wodurch die Betätigungsstangeneinheit 5 nach der Verrastung im Zylinderkolben 4 relativ zu diesem, unter Aufbau einer in Richtung Betätigungskraft Fb gerichteten Vorstellkraft Fv (siehe Fig.6b) geringfügig axial verschiebbar bleibt.

### Fig.4

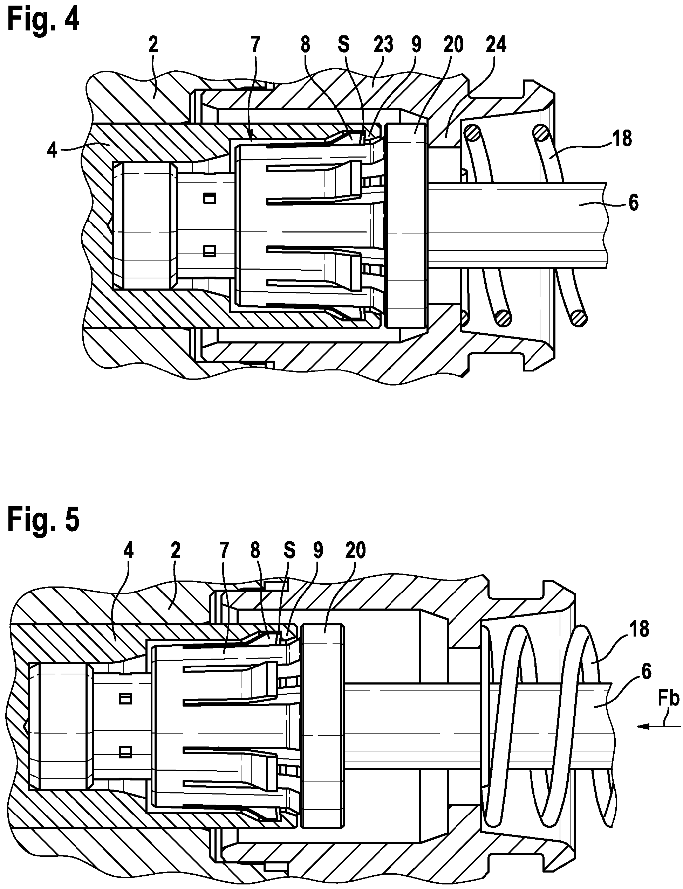

In der Fig.4ist die relative Lage des Halteteils 7 dargestellt, wenn der Zylinderkolben 4 sich in seiner unbetätigten Ausgangslage beziehungsweise Ruhelage befindet. Die auf den Zylinderkolben 4 aus Richtung Druckkammer 3 wirkenden Kräfte werden, zusammen mit der Rückstellkraft Fr in das Halteteil 7 eingeleitet, dieses stützt sich mittels des Stützrings 20 axial gegen den am Rückteil 23 angeordneten Stützanschlag 24, wodurch die Kräfte aus dem Zylinderkolben 4 in das Gehäuse 2 eingeleitet werden und die Position des Zylinderkolbens 4 definiert ist. Zusätzlich wird die aus der Rückstellfeder 18 in die Betätigungsstange 6 eigeleitet Vorspannkraft über den Kugelkopf15 in das Halteteil 7 und aus dem Stützring 20 ebenso in das Gehäuse 2 eingeleitet. Zwischen der Rastnase 8 und dem Anschlag 9 verbleibt der freie Axialabstand S.

### Fig.5

Bei einem Betätigungsvorgang mittels der in die Betätigungsstange 6 eingeleiteten Betätigungskraft Fb wird der Zylinderkolben 4 durch das Halteteil 7 in Richtung Druckkammer 3 gedrückt und axial versetzt, dabei wird die Rückstellfeder 18 vorgespannt. Der Axialabstand S zwischen der Rastnase 8 und dem Anschlag 9 bleibt bestehen.

### Fig.6

Nach Beendigung eines Bremsvorhangs, im Rücklauf liegt die Betätigungskraft Fb nicht mehr an der Betätigungsstange 6 an. Diese wird nun durch die Vorspannkraft der Rückstellfeder 18 zurückgezogen. Dabei verhaken sich die Rastnasen 8 an dem Anschlag 9, so dass der Zylinderkolben 4 von dem Halteteil 7 mitgezogen wird. Der Anschlag 9 drückt zugleich gegen und gleitet an den Gleitflächen der Spannasen, wodurch eine erste resultierende Kraftkomponente die Spannnase radial nach innen belastet und die Vorstellkraft Fv als eine zweite, zu der ersten orthogonale Kraftkomponente erzeugt wird.

### Fig.7

Sobald der Stützring 20 an dem Stützanschlag 24 anschlägt, endet die Rückwärtsbewegung der Betätigungsstange 6 und des Halteteils 7, so dass der Zylinderkolben 4 nicht mehr gezogen wird. Durch die vorstehend erwähnte, aus Richtung Druckkammer 3 auf den Zylinderkolben 4 wirkende Kräfte wird der Zylinderkolben 4 jedoch nachgeschoben und dabei relativ zum Halteteil 7 axial versetzt, bis der Kontakt zwischen dem Zylinderkolben 4 und der Stirnseite 29 besteht und die Ausgangslage gemäß Fig.4 wiederhergestellt ist.

### Fig.8

In der Fig.8 wird stark vereinfacht der Kraftverlauf im Halteteil 7 am Ende eines Rücklaufs gemäß Fig.6, beim Anschlagen am Stützanschlag 24 dargestellt. Die aus der Rückstellfeder 18 auf die Betätigungsstange 6 einwirkende Rückstellkraft Fr wird aus dem Kugelkopf 15 in das Halteteil 7 und über den Stützring 20 in den Stützanschlag 24 eingeleitet, die Rastnasen 8 und die Spannnasen liegen an dem Anschlag 9 an.

### Fig.9

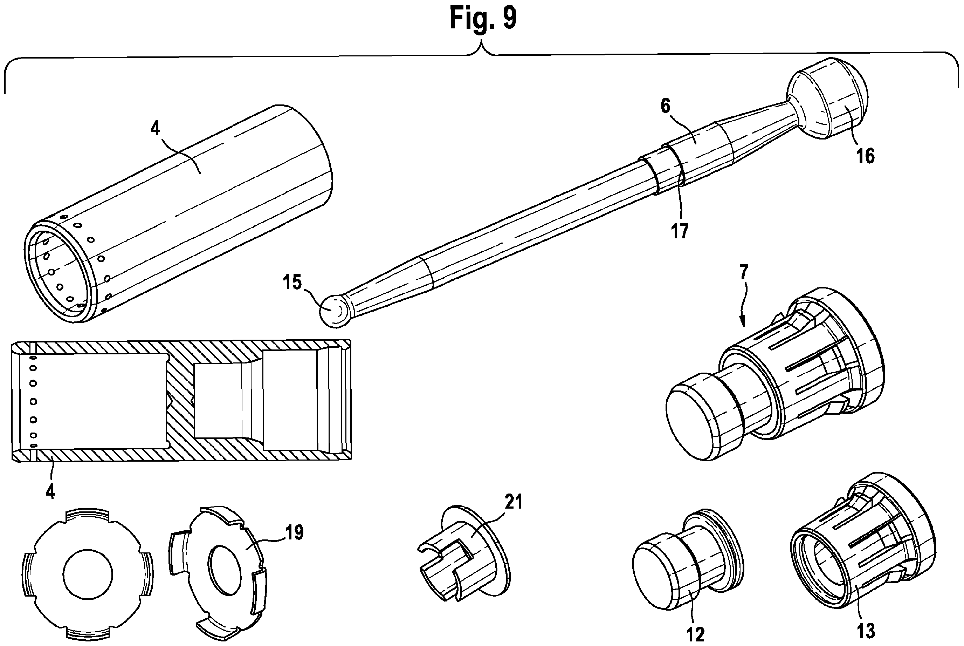

In der Fig.9 werden einige Komponenten und insbesondere der Aufbau der Abstützung der Rückstellfeder 18 an der Betätigungsstange 6 verdeutlicht. An der Betätigungsstange 6 ist ein Radialabsatz 17 ausgebildet. Statt eines Radialabsatzes kann innerhalb der Erfindung ebenso ein Flansch oder eine in eine Nut eingesetzte Scheibe oder Sprengring verwendet werden.

Die Rückstellfeder 18 stützt sich an einem vorzugsweisen kostengünstig aus Blech gestanzten tellerförmigen Stützelement 19, welches seinerseits unter Zwischenschalung einer Stützhülse 21 am Radialabsatz 17 abstützt. Für einen einfachen Zusammenbau ist der Durchmesser des Radialabsatzes 17 und sinngemäß die Durchgangsöffnungen im Stützelement 19 und der Stützhülse 21 größer als der vordere Kugelkopf 15 der Betätigungsstange 6 gewählt.

Je nach konstruktiven Erfordernissen kann innerhalb der Erfindung auf die Stützhülse 21 verzichtet oder die Stützhülse 21 mit dem Stützelement zu einer einzigen Komponente vereinigt werden.

### Bezugszeichen:

- 1: Bremsgerät
- 2: Gehäuse
- 3: Druckkammer
- 4: Zylinderkolben
- 5: Betätigungsstangeneinheit
- 6: Betätigungsstange
- 7: Halteteil
- 8: Rastnase
- 9: Anschlag
- 10: Stirnfläche
- 11: Hinterschnitt
- 12: Druckteil
- 13: Rastteil
- 14: Federarm
- 15: Kugelkopf
- 16: Kugelkopf
- 17: Radialabsatz
- 18: Rückstellefeder
- 19: Stützelement
- 20: Stützring
- 21: Stützhülse
- 22: Korpus
- 23: Rückteil
- 24: Stützanschlag
- 25: Aufsatz
- 26: Randbereich
- 27: Verbindungsstelle
- 28: Sacklochbohrung
- 29: Stirnseite
- 30: Hinterkante
- 32: Einhackfläche
- S: Axialabstand
- Fb: Betätigungskraft
- Fv: Vorstellkraft
- Fr: Rückstellkraft

## Patentansprüche

1. Bremsgerät (1) für eine hydraulische Kraftfahrzeugbremsanlage, mit einem Gehäuse (2), wenigstens einer in dem Gehäuse (2) angeordneten Druckkammer (3), wobei die Drucckammer (3) durch wenigstens einen, in axiale Richtung verschiebbaren Zylinderkolben (4) begrenzt ist, wobei der Zylinderkolben (4) durch eine, eine Betätigungsstange (6) umfassende Betätigungsstangeneinheit (5) mit einer Betätigungskraft (Fb) mechanisch betätigbar ist, wobei die Betätigungsstangeneinheit (5) durch eine Rastverbindung an dem Zylinderkolben (4) festgemacht ist, wobei die Rastverbindung durch eine axiale Relativverschiebung zwischen der Betätigungsstangeneinheit (5) und dem Zylinderkolben (4) herbeigeführt ist, **dadurch gekennzeichnet, dass** an einem zylinderkolbenseitigen Ende der Betätigungsstange (6) ein gesondertes Halteteil (7) festgemacht ist, welches zur Kräfteübertragung aus der Betätigungsstange (6) in den Zylinderkolben (4) in beide axialen Richtungen vorgesehen ist und wobei der Zylinderkolben (4) in seiner unbetätigten Ausgangslage durch das Halteteil (7) axial gegen das Gehäuse (2) abgestützt ist.

2. Bremsgerät (1) nach Anspruch 1 **dadurch gekennzeichnet, dass** die an dem Zylinderkolben (4) verrastete Betätigungsstangeneinheit (5) in axiale Richtung relativ zum Zylinderkolben (4) begrenzt verschiebbar ist.

3. Bremsgerät (1) nach wenigstens einem der vorstehenden Ansprüche **dadurch gekennzeichnet, dass** das Halteteil (7) wenigstens eine Rastnase (8) aufweist, die mit einem axialen Anschlag (9) am Zylinderkolben (4) zusammenwirkt.

4. Bremsgerät (1) nach Anspruch 3 **dadurch gekennzeichnet, dass** der Anschlag (9) und die Rastnase (8) korrespondierenden Kontaktflächen aufweisen, welche derart zusammenwirken, dass die Rastnase (8) bei einem axial gerichteten Anpressen gegen den Anschlag (9) mit einer radial nach außen wirkenden Kraftkomponente beaufschlagt ist

5. Bremsgerät (1) nach Anspruch 4 **dadurch gekennzeichnet, dass** eine axial der Rastnase (8) zugewandte Stirnfläche (10) des Anschlags (9) derart schräg oder verrundet ausgebildet ist, dass der Anschlag einen radialen Hinterschnitt (11) aufweist.

6. Bremsgerät (1) nach wenigstens einem der vorstehenden Ansprüche **dadurch gekennzeichnet, dass** das Halteteil (7) wenigstens eine Spannnase mit einer schrägen Gleitfläche aufweist, die beim Anlegen an einem axialen Anschlag (9) des Zylinderkolbens (4) im Halteteil (7) eine in Richtung der Betätigungskraft (Fb) gerichtete Vorstellkraft (Fv) erzeugt.

7. Bremsgerät (1) nach wenigstens einem der Ansprüche 3 bis 6 **dadurch gekennzeichnet, dass** das Halteteil (7) wenigstens zweiteilig ausgebildet ist mit einem Druckteil (12), das zur Übertragung der Betätigungskraft Fb) aus der Betätigungsstange (6) in den Zylinderkolben (4) vorgesehen ist und einem Rastteil (13), das mit dem Druckteil (12) verbunden ist und wenigstens eine Rastnase (8) zum Verrasten in dem Zylinderkolben (4) aufweist.

8. Bremsgerät (1) nach wenigstens einem der Ansprüche 3 bis 7 **dadurch gekennzeichnet, dass** das Halteteil (7) wenigstens 3 am Umfang verteilt angeordneten Rastnasen (8) aufweist.

9. Bremsgerät (1) nach wenigstens einem der Ansprüche 3 bis 8 **dadurch gekennzeichnet, dass** die Rastnase (8) an einem ersten, freien Ende eines Federarms (14) ausgebildet ist, dessen zweites Ende mit dem Halteteil (7) vereinigt ist.

10. Bremsgerät (1) nach wenigstens einem der vorstehenden Ansprüche **dadurch gekennzeichnet, dass** das Halteteil (7) an seinem dem Zylinderkolben (4) abgewandten Ende einen Stützring (20) aufweist, der zur Einleitung von Axialkräften aus dem Zylinderkolben (4) in das Gehäuse (2) vorgesehen ist.

11. Bremsgerät (1) nach wenigstens einem der Ansprüche 7 bis 10 **dadurch gekennzeichnet, dass** das Rastteil (13) aus einem thermoplastischen Werkstoff ausgebildet ist.

12. Bremsgerät (1) nach wenigstens einem der vorstehenden Ansprüche **dadurch gekennzeichnet, dass** die Betätigungsstange (6) einteilig ausgebildet ist und an jedem Ende einen Kugelkopf (15, 16) aufweist.

13. Bremsgerät (1) nach wenigstens einem der vorstehenden Ansprüche **dadurch gekennzeichnet, dass** die Betätigungsstange (6) einen Radialabsatz (17) aufweist, durch den in die Betätigungsstange (6) eine in einer Rückstellefeder (18) generierte Rückstellkraft (Fr) zum axialen Versetzen der Betätigungsstangeneinheit (5) in eine ungebremste Ausganslage eingeleitet wird.

14. Bremsgerät (1) nach Anspruch 13 **dadurch gekennzeichnet, dass** die Rückstellkraft (Fr) in den Radialabsatz (17) über ein Stützelement (19) eingeleitet wird, das axial verschiebbar an der Betätigungsstange (6) geführt angeordnet ist.

15. Bremsgerät (1) nach wenigstens einem der vorstehenden Ansprüche **dadurch gekennzeichnet, dass** das Bremsgerät (1) zur Erzeugung von Bremsdruck mit wenigstens einer elektromechanischen oder elektrohydraulischen Verstärkerstufe zusammenwirkt oder in die Verstärkerstufe integriert ist.

## Claims

1. Brake unit (1) for a hydraulic motor vehicle brake system, with a housing (2), at least one pressure chamber (3) which is arranged in the housing (2), the pressure chamber (3) being delimited by way of at least one cylinder piston (4) which can be displaced in the axial direction, it being possible for the cylinder piston (4) to be actuated mechanically with an actuating force (Fb) by way of an actuating rod unit (5) which comprises an actuating rod (6), the actuating rod unit (5) being attached to the cylinder piston (4) by way of a latching connection, the latching connection being brought about by way of an axial relative displacement between the actuating rod unit (5) and the cylinder piston (4), **characterized in that** a separate holding part (7) is attached to a cylinder piston-side end of the actuating rod (6), which separate holding part (7) is provided for the transmission of force from the actuating rod (6) into the cylinder piston (4) in both axial directions, and the cylinder piston (4) being supported axially against the housing (2) by way of the holding part (7) in its non-actuated starting position.

2. Brake unit (1) according to Claim 1, **characterized in that** the actuating rod unit (5) which is latched to the cylinder piston (4) can be displaced to a limited extent in the axial direction relative to the cylinder piston (4).

3. Brake unit (1) according to at least one of the preceding claims, **characterized in that** the holding part (7) has at least one latching lug (8) which interacts with an axial stop (9) on the cylinder piston (4).

4. Brake unit (1) according to Claim 3, **characterized in that** the stop (9) and the latching lug (8) have corresponding contact faces which interact in such a way that, in the case of being pressed on in an axially directed manner against the stop (9), the latching lug (8) is loaded with a radially outwardly acting force component.

5. Brake unit (1) according to Claim 4, **characterized in that** an end face (10), facing the latching lug (8) axially, of the stop (9) is of obliquely rounded configuration in such a way that the stop has a radial undercut (11).

6. Brake unit (1) according to at least one of the preceding claims, **characterized in that** the holding part (7) has at least one clamping lug with an oblique sliding face which, when it bears against an axial stop (9) of the cylinder piston (4) in the holding part (7), generates a preliminary setting force (Fv) which is directed in the direction of the actuating force (Fb).

7. Brake unit (1) according to at least one of Claims 3 to 6, **characterized in that** the holding part (7) is configured at least in two pieces with a pressure part (12) which is provided for the transmission of the actuating force (Fb) from the actuating rod (6) into the cylinder piston (4), and with a latching part (13) which is connected to the pressure part (12) and has at least one latching lug (8) for latching in the cylinder piston (4).

8. Brake unit (1) according to at least one of Claims 3 to 7, **characterized in that** the holding part (7) has at least three latching lugs (8) which are arranged distributed on the periphery.

9. Brake unit (1) according to at least one of Claims 3 to 8, **characterized in that** the latching lug (8) is configured at a first, free end of a spring arm (14), the second end of which is joined to the holding part (7).

10. Brake unit (1) according to at least one of the preceding claims, **characterized in that**, at its end which faces away from the cylinder piston (4), the holding part (7) has a supporting ring (20) which is provided for the introduction of axial forces from the cylinder piston (4) into the housing (2).

11. Brake unit (1) according to at least one of Claims 7 to 10, **characterized in that** the latching part (13) is configured from a thermoplastic material.

12. Brake unit (1) according to at least one of the preceding claims, **characterized in that** the actuating rod (6) is configured in one piece and has a spherical head (15, 16) at each end.

13. Brake unit (1) according to at least one of the preceding claims, **characterized in that** the actuating rod (6) has a radial shoulder (17), by way of which a restoring force (Fr), generated in a restoring spring (18), for the axial displacement of the actuating rod unit (5) into an unbraked starting position is introduced into the actuating rod (6).

14. Brake unit (1) according to Claim 13, **characterized in that** the restoring force (Fr) is introduced into the radial shoulder (17) via a supporting element (19) which is arranged axially displaceably on the actuating rod (6) in a guided manner.

15. Brake unit (1) according to at least one of the preceding claims, **characterized in that**, in order to generate brake pressure, the brake unit (1) interacts with at least one electromechanical or electrohydraulic booster stage or is integrated into the booster stage.

## Revendications

1. Appareil de freinage (1) pour un système de freinage hydraulique de véhicule automobile, comprenant un carter (2), au moins une chambre de pression (3) agencée dans le carter (2), la chambre de pression (3) étant délimitée par au moins un piston de cylindre (4) déplaçable dans la direction axiale, le piston de cylindre (4) pouvant être actionné mécaniquement avec une force d'actionnement (Fb) par une unité de tige d'actionnement (5) comprenant une tige d'actionnement (6), l'unité de tige d'actionnement (5) étant fixée sur le piston de cylindre (4) par une liaison par encliquetage, la liaison par encliquetage étant réalisée par un déplacement axial relatif entre l'unité de tige d'actionnement (5) et le piston de cylindre (4), **caractérisé en ce qu'**une partie de retenue séparée (7) est fixée à une extrémité côté piston de cylindre de la tige d'actionnement (6), qui est prévue pour transmettre la force de la tige d'actionnement (6) au piston de cylindre (4) dans les deux directions axiales, et dans lequel le piston de cylindre (4), dans sa position initiale non actionnée, s'appuie axialement contre le carter (2) par la partie de retenue (7).

2. Appareil de freinage (1) selon la revendication 1, **caractérisé en ce que** l'unité de tige d'actionnement (5) encliquetée sur le piston de cylindre (4) peut être déplacée de manière limitée dans la direction axiale par rapport au piston de cylindre (4).

3. Appareil de freinage (1) selon au moins l'une quelconque des revendications précédentes, **caractérisé en ce que** la partie de retenue (7) présente au moins un ergot d'encliquetage (8), qui coopère avec une butée axiale (9) sur le piston de cylindre (4).

4. Appareil de freinage (1) selon la revendication 3, **caractérisé en ce que** la butée (9) et l'ergot d'encliquetage (8) présentent des surfaces de contact correspondantes, qui coopèrent de telle sorte que l'ergot d'encliquetage (8) est sollicité avec une composante de force agissant radialement vers l'extérieur lors d'une pression dirigée axialement contre la butée (9).

5. Appareil de freinage (1) selon la revendication 4, **caractérisé en ce qu'**une surface frontale (10) de la butée (9), tournée axialement vers l'ergot d'encliquetage (8), est configurée sous forme oblique ou arrondie, de telle sorte que la butée présente une contre-dépouille radiale (11).

6. Appareil de freinage (1) selon au moins l'une quelconque des revendications précédentes, **caractérisé en ce que** la partie de retenue (7) présente au moins un ergot de serrage ayant une surface de glissement oblique qui, lors de l'application sur une butée axiale (9) du piston de cylindre (4) dans la partie de retenue (7), génère une force d'avancement (Fv) dirigée dans la direction de la force d'actionnement (Fb).

7. Appareil de freinage (1) selon au moins l'une quelconque des revendications 3 à 6, **caractérisé en ce que** la partie de retenue (7) est configurée au moins en deux parties avec une partie de pression (12), qui est prévue pour transmettre la force d'actionnement (Fb) de la tige d'actionnement (6) dans le piston de cylindre (4), et une partie d'encliquetage (13), qui est reliée à la partie de pression (12) et qui présente au moins un ergot d'encliquetage (8) pour l'encliquetage dans le piston de cylindre (4).

8. Appareil de freinage (1) selon au moins l'une quelconque des revendications 3 à 7, **caractérisé en ce que** la partie de retenue (7) présente au moins 3 ergots d'encliquetage (8) agencés de manière répartie sur la périphérie.

9. Appareil de freinage (1) selon au moins l'une quelconque des revendications 3 à 8, **caractérisé en ce que** l'ergot d'encliquetage (8) est formé à une première extrémité libre d'un bras de ressort (14), dont la deuxième extrémité est réunie avec la partie de retenue (7).

10. Appareil de freinage (1) selon au moins l'une quelconque des revendications précédentes, **caractérisé en ce que** la partie de retenue (7) présente, à son extrémité détournée du piston de cylindre (4), une bague d'appui (20) qui est prévue pour introduire des forces axiales du piston de cylindre (4) dans le carter (2).

11. Appareil de freinage (1) selon au moins l'une quelconque des revendications 7 à 10, **caractérisé en ce que** la partie d'encliquetage (13) est formée en un matériau thermoplastique.

12. Appareil de freinage (1) selon au moins l'une quelconque des revendications précédentes, **caractérisé en ce que** la tige d'actionnement (6) est formée en une seule partie et présente à chaque extrémité une tête sphérique (15, 16).

13. Appareil de freinage (1) selon au moins l'une quelconque des revendications précédentes, **caractérisé en ce que** la tige d'actionnement (6) présente un épaulement radial (17), par lequel une force de rappel (Fr) générée dans un ressort de rappel (18) est introduite dans la tige d'actionnement (6) pour décaler axialement l'unité de tige d'actionnement (5) dans une position initiale non freinée.

14. Appareil de freinage (1) selon la revendication 13, **caractérisé en ce que** la force de rappel (Fr) est introduite dans l'épaulement radial (17) par l'intermédiaire d'un élément d'appui (19), qui est agencé de manière à pouvoir se déplacer axialement de manière guidée sur la tige d'actionnement (6).

15. Appareil de freinage (1) selon au moins l'une quelconque des revendications précédentes, **caractérisé en ce que** l'appareil de freinage (1) coopère avec au moins un étage amplificateur électromécanique ou électrohydraulique pour générer la pression de freinage ou est intégré dans l'étage amplificateur.
